# EUROPÄISCHE PATENTANMELDUNG

(11) **EP 4 650 520 A1**
(43) Veröffentlichungstag der Anmeldung: **19.11.2025**
(21) Anmeldenummer: 24175477.9
(22) Anmeldetag: 13.05.2024
(51) Int. Cl.: E01F 9/30, E01F 9/608, E01F 9/677, E01F 9/681, E01F 9/685, G09F 7/18, G08G 1/02, G08G 1/042, G08G 1/052, G08G 1/0967, G01V 15/00

(54) **EINBAUANORDNUNG UND VERFAHREN ZUM ERSTELLEN EINER EINBAUANORDNUNG**

(71) Anmelder: Riedlberger, Robert, 85302 Singenbach (DE)
(72) Erfinder: Riedlberger, Robert, 85302 Singenbach (DE)
(74) Vertreter: Wunderlich & Heim Patentanwälte PartG mbB

(57) **Zusammenfassung**

Die Erfindung betrifft eine Einbauanordnung (10) entlang eines Randes (48) eines Verkehrsweges (12), insbesondere einer Straße, eines Flusses oder einer Bahnstrecke, mit einer Aufnahmeeinrichtung (14) zum Einbau eines Verkehrsführungselementes (18), wobei die Aufnahmeeinrichtung (14) fest im Untergrund einer Bodenoberfläche (22) installiert ist. Nach der Erfindung ist vorgesehen, dass die Aufnahmeeinrichtung (14) einen Aufnahmeraum (26) aufweist und insgesamt unter der Bodenoberfläche (22) angeordnet ist und dass die Aufnahmeeinrichtung (14) eine Markereinheit (30) zum Lokalisieren der Aufnahmeeinrichtung (14) unter der Bodenoberfläche (22) aufweist.

## Beschreibung

Die Erfindung betrifft eine Einbauanordnung entlang eines Randes eines Verkehrsweges, insbesondere einer Straße, eines Flusses oder einer Bahnstrecke, mit einer Aufnahmeeinrichtung zum Einbau eines Verkehrsführungselementes, wobei die Aufnahmeeinrichtung fest im Untergrund einer Bodenoberfläche installiert ist, gemäß dem Oberbegriff des Anspruchs 1.

Die Erfindung betrifft weiter ein Verfahren zum Erstellen einer Einbauanordnung entlang eines Randes eines Verkehrsweges, insbesondere einer Straße, eines Flusses oder einer Bahnstrecke, mit einer Aufnahmeeinrichtung zum Einbau eines Verkehrsführungselementes, wobei die Aufnahmeeinrichtung fest im Untergrund einer Bodenoberfläche installiert ist, gemäß dem Oberbegriff des Anspruchs 9.

Verkehrswege, insbesondere Straßen, sind in der Regel mehrschichtig mit einem sogenannten Oberbau und einem sogenannten Unterbau aufgebaut. Der Oberbau besteht üblicherweise aus einer Deckschicht, insbesondere einer Asphalt- oder Betondecke, und ein oder mehreren Tragschichten. Die einzelnen Schichten können dabei eine Schottertragschicht und eine Frostschutzschicht aufweisen. Als Unterbau wird üblicherweise eine künstlich erstellte Erdschicht unterhalb des Oberbaus bezeichnet.

Für die Sicherheit von Verkehrswegen sind die am Rand installierten Verkehrsführungselemente, insbesondere Verkehrsschilder, wesentlich. In grundsätzlich bekannter Weise werden diese mit Gründungselementen in den den Verkehrsweg umgebenden Boden eingebracht. Die Gründungselemente können beispielsweise als Schraubanker mit aushärtbarer Masse oder als pfahlartiger Träger in den Boden eingebracht werden. Aus der DE 10 2020 106 942 A1 ergibt sich beispielsweise ein Gründungselement, welches, nicht wie üblich senkrecht in einen Rand oder einen Randstreifen einer Straße eingebracht wird, sondern welches in einem geneigten Winkel zur Horizontalen so eingebracht wird, so dass das Gründungselement seitlich bis in den stabilen Unterbau der Straße hineinragt. In der Regel werden die Verkehrsführungselemente wenige Zentimeter bis Meter entfernt von dem Verkehrsweg auf einem Rand-, Mittel- oder Seitentrennstreifen angebracht. Eine Verankerung in dem losen, unbefestigten Randstreifen selbst ist wenig praktikabel und nicht gewünscht, da die Anforderungen für eine langlebige stabile Halterung nicht, jedenfalls nicht zuverlässig im Randstreifen gegeben sind.

Bei der nachträglichen Anbringung von Verkehrszeichen entlang eines Verkehrsweges ist es daher üblich, eine Verankerung in den stabilen des Verkehrsweges, etwa den Unterbau einer Straße einzubringen, so wie dies etwa in der DE 10 2020 106 942 A1 beschrieben ist.

Eine nachträgliche Installation von Verkehrsführungselementen, insbesondere Verkehrsschildern, im unmittelbaren Bereich des Verkehrsweges kann zu einer Beschädigung des Verkehrsweges führen, jedenfalls dessen Stabilität und Langlebigkeit beeinträchtigen.

Der Erfindung liegt die **Aufgabe** zugrunde, eine besonders stabile und sichere Anbringung von Verkehrsführungselementen entlang von Verkehrswegen auch nachträglich nach der Erstellung des Verkehrsweges zu gewährleisten.

Die Aufgabe wird nach der Erfindung durch eine Einbauanordnung mit den Merkmalen des Anspruchs 1 gelöst. Bevorzugte Ausführungsformen der Erfindung sind in den abhängigen Ansprüchen angegeben.

Die erfindungsgemäße Einbauanordnung ist dadurch gekennzeichnet, dass die Aufnahmeeinrichtung einen Aufnahmeraum aufweist und insgesamt unter der Bodenoberfläche angeordnet ist und dass die Aufnahmeeinrichtung eine Markereinheit zum Lokalisieren der Aufnahmeeinrichtung unter der Bodenoberfläche aufweist.

Eine Grundidee der Erfindung liegt darin, Einbauanordnungen frühzeitig, etwa schon beim Bau des Verkehrsweges, auszubilden, selbst wenn diese noch gar nicht benötigt werden. Die Einbauanordnungen werden dabei so ausgeführt, dass sie unter einer Bodenoberfläche liegen und somit auch über eine längere Zeit eines Nichtgebrauchens gut geschützt sind. Wird die Einbauanordnung vorzugsweise bereits beim Bau des Verkehrsweges etwa im stabilen Unterbau einer Straße verankert, so kann sichergestellt werden, dass der Unterbau nicht durch ein nachträgliches Aufholen oder Einbringen der Verkehrsführungselemente beschädigt wird, was die Stabilität der Verkehrsweges selbst beeinträchtigen könnte.

Nach einem weiteren Aspekt der Erfindung ist die Aufnahmeeinrichtung mit eine Markereinheit zum Lokalisieren der Aufnahmeeinrichtung unter der Bodenoberfläche versehen. Eine solche Markereinheit ermöglicht es, die Aufnahmeeinrichtung auch nach einer längeren Zeit unter der Bodenoberfläche schnell und zuverlässig zu lokalisieren und so etwa ein Verkehrsschild auch nachträglich ohne erhöhten Aufwand sicher und effizient anzubringen. Die Aufnahmeeinrichtung ist dabei aber nicht auf die Aufnahme und Halterung üblicher Verkehrszeichen beschränkt, sondern kann unterschiedliche Verkehrsführungselemente aufnehmen, etwa auch elektronische Signaleinheiten oder ähnliches, wie sie für ein zukünftiges autonomes Fahren aktuell oder zukünftig benötigt werden.
sein Eine bevorzugte Ausführungsform der Erfindung besteht darin, dass an der Aufnahmeeinrichtung ein Halterungselement vorgesehen ist und dass das Halterungselement der Aufnahmeeinrichtung zum Halten von mindestens einem Verkehrsführungselement, insbesondere einem Verkehrsschild, ausgebildet ist. An der Aufnahmeeinrichtung ist ein Halterungselement ausgebildet, mit dem Verkehrsführungselemente fixiert und in einer stabilen Position gehalten werden können. Das Halterungselement kann Teil des Aufnahmeraumes oder zusätzlich hierzu ausgebildet sein. Grundsätzlich können unter einem Verkehrsführungselement Verkehrsleitplanken, insbesondere Verkehrsleitplankenpfosten, Ampeleinrichtungen, Führungsstangen und/oder Straßenmarkierungen gemeint sein. Alternativ oder ergänzend dazu kann das Halterungselement auch als Deckel- und/oder Abdeckung zum Verschließen der Aufnahmeeinrichtung ausgebildet sein. Als besonders vorteilhaft hat es sich herausgestellt, wenn das Halterungselement lösbar, insbesondere mit einer Dreh-, Steck- und/oder Schiebeverbindung, an der Aufnahmeeinrichtung angeordnet ist. Dabei kann das Halterungselement vollständig oder teilweise in die Aufnahmeeinrichtung eingeführt werden. Durch eine derartige Ausgestaltung wird eine besonders stabile und sichere Verankerung von Verkehrsführungselementen sichergestellt. Ebenso wird dadurch ein flexibles Austauschen des Halterungselements je nach Art des Verkehrsführungselements ermöglicht, ohne die Aufnahmeeinrichtung aus dem Boden zu entfernen. Das Verkehrsführungselement kann nach oben über die Bodenoberfläche hinausragen oder, etwa bei einer elektronischen Signaleinheit in dem Aufnahmeraum angeordnet und insgesamt unter der Bodenoberfläche liegen.

Eine besonders zweckmäßige Ausgestaltung der Erfindung besteht ebenso darin, dass das Halterungselement eine Öffnung zum Einsetzen, insbesondere zum Eindrehen oder Einschieben einer Stange, für Verkehrsschilder aufweist, wobei die Stange zumindest teilweise in dem Aufnahmeraum angeordnet ist. Hierzu kann die Öffnung mit einem Gewinde oder Mit geeigneten Profilierungen ausgebildet sein. Als vorteilhaft hat es sich herausgestellt, wenn die Öffnung zum vertikalen Einsetzen des Verkehrsführungselementes mit Stange vorgesehen ist. Ebenso ist denkbar, dass das Verkehrsführungselement mit einer Neigung in die Aufnahmeeinrichtung eingesetzt werden kann. Der Winkel zwischen dem Verkehrsführungselement und der Vertikalachse kann insbesondere zwischen 0 und 45 Grad betragen. Dadurch kann auch bei einer Hangneigung eine vertikale Position des Verkehrsführungselementes erreicht werden. Allgemein kann mit dem Einbringen einer Öffnung zum Einsetzen in das Halterungselement eine einfache, flexible und reversible Installation des mindestens einen Verkehrsführungselements erreicht werden.

Besonders bevorzugt ist es nach einer Ausgestaltung der Erfindung, dass die Markereinheit als Responder zum drahtlosen Ansprechen, insbesondere mit einem Draht und/oder einer Spule ausgebildet ist. Grundsätzlich soll mit der Markereinheit ein vereinfachtes Wiederauffinden der Aufnahmeeinrichtung, welche sich im Wesentlichen unter der Bodenoberfläche befindet, ermöglicht werden. Durch das Ausbilden der Markereinheit als Responder kann in kostengünstiger und einfacher Weise ein Wiederauffinden der erfindungsgemäßen Aufnahmeeinrichtung ermöglicht werden, ohne dass dabei die genaue Position der Aufnahmeeinrichtung bekannt ist. Allgemein kann die Markereinheit an einer von außen sichtbaren oder an einer nicht sichtbaren Stelle angeordnet sein. Besonders vorteilhaft ist es, wenn die Markereinheit zum Ausgeben eines optischen Signals, beispielsweise mit einer Leuchteinheit und/oder einem Reflektor, ausgebildet ist. Besonders zweckmäßig ist es, wenn zum drahtlosen Ansprechen elektromagnetische Signale verwendet werden. Vorzugsweise ist als Markereinheit ein RFID-Chip angeordnet, welcher ohne eigene Energieversorgung ausgebildet ist und bei einem eingehenden Eingangs- oder Suchsignal ein Antwortsignal ausgibt.

Eine weitere vorteilhafte Ausgestaltung der Erfindung besteht darin, dass die Aufnahmeeinrichtung aus Metall, insbesondere Stahl, Kunststoff und/oder Beton gebildet ist.

Hierdurch kann die Langlebigkeit verbessert werden und eine dauerhaft stabile Anbringung des Verkehrsführungselements sichergestellt werden.

In einer bevorzugten Ausführungsform ist vorgesehen, dass die Aufnahmeeinrichtung mit mindestens einem Verankerungselement versehen ist. Das Verankerungselement kann sich zumindest teilweise in den Unterbau und/oder den Oberbau des Verkehrsweges erstrecken. Denkbar ist allerdings auch, dass sich das Verankerungselement in das Bankett und/oder einen sonstigen Untergrund erstreckt. Das Verankerungselement kann vorzugsweise mindestens ein spitz zulaufendes Ende aufweisen. Ebenso kann das Verankerungselement in einem schrägen Winkel von der Aufnahmeeinrichtung abstehen. Nach einer Weiterbildung weist das Verankerungselement eine Krümmung und oder eine Biegung auf. Mit dem Verankerungselement soll eine stabile Befestigung der Aufnahmeeinrichtung im Untergrund sichergestellt werden.

Besonders bevorzugt ist es nach einer Ausgestaltung der Erfindung, dass die Aufnahmeeinrichtung mit einer Sensoreinheit, insbesondere einem GPS-Sensor versehen ist. Hierdurch soll eine besonders genaue Standortbestimmung der erfindungsgemäßen Aufnahmeeinrichtung, insbesondere mit einem mobilen Endgerät, beispielsweise einem Smartphone oder einem Tablet Computer, ermöglicht werden. Besonders vorteilhaft ist es, wenn die Sensoreinheit zum Erfassen von Daten betreffend den Verkehrsweg, insbesondere Verkehrsintensität und/oder Verkehrsfrequenz ausgebildet ist. Ebenso kann die Sensoreinheit zum Erfassen seismographischer Daten ausgebildet sein. Alternativ oder ergänzend dazu kann die Sensoreinheit zum Erfassen der Temperatur, des Niederschlags, der Luftfeuchtigkeit und/oder der Sonneneinstrahlung ausgebildet sein.

Eine besonders vorteilhafte Ausgestaltung der Erfindung besteht weiterhin darin, dass die Aufnahmeeinrichtung mit einer Funkeinrichtung versehen ist, welche zum Versenden von Positions- und/oder Geschwindigkeitsdaten an Verkehrsteilnehmer ausgebildet ist. Die Positions- und/oder Geschwindigkeitsdaten können insbesondere die am jeweiligen Streckenabschnitt zulässige Höchstgeschwindigkeit betreffen. Alternativ oder ergänzend dazu kann die Funkeinrichtung, insbesondere zum Versenden der mit der oben beschriebenen Sensoreinheit erfassten Daten ausgebildet sein. Dadurch kann die Verkehrssicherheit beispielsweise durch eine dynamische Anpassung der zulässigen Höchstgeschwindigkeit abhängig von den erfassten Sensordaten erhöht werden.

Hinsichtlich des Verfahrens ist die Erfindung dadurch gekennzeichnet, dass die Aufnahmeeinrichtung mit einem Aufnahmeraum insgesamt unter der Bodenoberfläche angeordnet wird und dass die Aufnahmeeinrichtung mit einer Markereinheit zum Lokalisieren der Aufnahmeeinrichtung unter der Bodenoberfläche versehen wird. Mit dem erfindungsgemäßen Verfahren kann insbesondere eine Einbauanordnung erzielt werden, wie diese zuvor beschrieben wurde. Dabei können die zuvor beschriebenen Vorteile erreicht werden.

Gemäß einer bevorzugten Verfahrensvariante ist vorgesehen, dass die Aufnahmeeinrichtung bei oder nach dem Bau des Verkehrsweges fest im Untergrund der Bodenoberfläche installiert wird. Die Einbauanordnung kann somit in vorteilhafter Weise auch nach dem Bau eines Verkehrsweges installiert werden, was die Integration in bestehende Verkehrswege ermöglicht.

Besonders bevorzugt ist es dabei, dass ein Verkehrsführungselement nachträglich in die Aufnahmeeinrichtung eingebaut wird, wobei die Aufnahmeeinrichtung mittels der Markereinheit lokalisiert wird. Das Verkehrsführungselement kann ausdrücklich Schilder aller Art (mit Haltestangen), Leitplanken und/oder Straßenmarkierungen umfassen. Vorteilhaft ist es, wenn die Markereinheit mittels elektromagnetischer Wellen lokalisiert wird. Die Markereinheit kann dabei in oder an der Aufnahmeeinrichtung angeordnet sein. Hierdurch wird das Wiederauffinden der Aufnahmeeinrichtung erleichtert.

Eine besonders zweckmäßige Weiterentwicklung des erfindungsgemäßen Verfahrens besteht darin, dass der Verkehrsweg, insbesondere eine Straße, mit einem verfestigten Unterbau und einem Oberbau ausgebildet wird, wobei die Aufnahmeeinrichtung in dem verfestigten Unterbau fest angebracht wird. Die Aufnahmeeinrichtung kann dabei teilweise oder vollständig in dem verdichteten Unterbau angeordnet sein und verschieden geformt sein. Als besonders vorteilhaft haben sich rechteckige, spitz zulaufende oder zylindrische Formen der Aufnahmeeinrichtung herausgestellt.

Alternativ kann die Aufnahmeeinrichtung auch entlang des Verkehrswegrandes im Boden, insbesondere im Bankett, installiert werden. Denkbar ist auch, dass nur ein Teil der Aufnahmeeinrichtung in den verdichteten Unterbau hineinragt. Durch das Anbringen der Aufnahmeeinrichtung in dem verdichteten Unterbau des Verkehrsweges kann eine besonders stabile Verankerung der Aufnahmeeinrichtung erreicht werden.

Die Erfindung wird nachfolgend anhand von bevorzugten Ausführungsvarianten näher erläutert, welche schematisch in den Zeichnungen dargestellt sind. In den Zeichnungen zeigen:

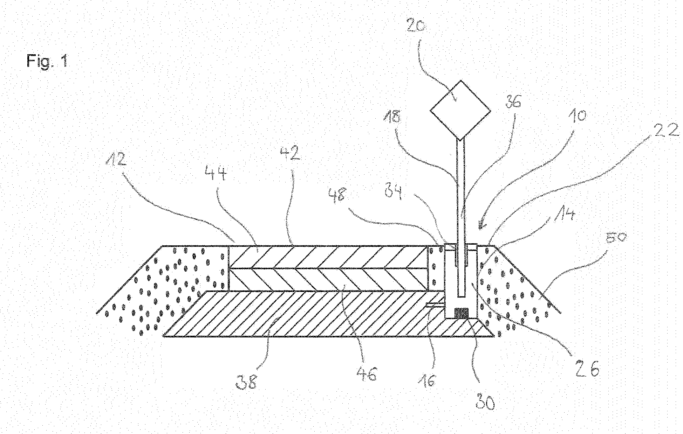

- Fig. 1: eine erste schematische Querschnittsansicht eines Verkehrsweges 12 mit einer erfindungsgemäßen Einbauanordnung 10 mit Verkehrsschild, und
- Fig. 2: eine zweite schematische Querschnittsansicht eines Verkehrsweges 12 mit einer erfindungsgemäßen Einbauanordnung mit elektronischem Verkehrsschild.

Die Zeichnung 1 zeigt eine schematische Querschnittsansicht eines Verkehrsweges 12 mit einer erfindungsgemäßen Einbauanordnung 10.

Der Verkehrsweg 12 kann einen Unterbau 38 sowie einen Oberbau 42 aufweisen, wobei der Oberbau 42 oberhalb des Unterbaus 38 angeordnet ist. Der Oberbau 42 kann mehrere Schichten, insbesondere eine Tragschicht 46 und einen Straßenbelag 44, aufweisen. Der Unterbau 38 wird üblicherweise auf einem Untergrund angeordnet und kann beispielsweise aus einem verdichteten Kies- oder Sandmaterial gebildet sein. Der Unterbau 38 kann ebenfalls aus mehreren verfestigten Schichten aufgebaut sein. Der Verkehrsweg 12 ist beispielhaft als Straße ausgebildet. Unter Verkehrswegen 12 im Sinne der Erfindung sind aber auch insbesondere Flüsse, Kanäle und/oder Schienenstrecken zu verstehen.

Seitlich entlang eines Randes 48 des Verkehrsweges 12 ist eine erfindungsgemäße Aufnahmeeinrichtung 14 im Boden angeordnet. Die Aufnahmeeinrichtung 14 kann ein seitlich abstehendes Verankerungselement 16 aufweisen, welches im Unterbau 38 befestigt sein kann. Die Aufnahmeeinrichtung 14 umfasst einen Aufnahmeraum 26 mit einer Markereinheit 30. Die Aufnahmeeinrichtung 14 kann dabei, wie hier gezeigt, in einem Bodenmaterial 50, insbesondere im Unterbau 38, teilweise oder vollständig angeordnet sein. Die Aufnahmeeinrichtung 14 kann aber auch nur am Rand 48 im Bodenmaterial 50 angeordnet sein, welches vorzugsweise verfestigt ist. Ebenso kann die Aufnahmeeinrichtung 14 teilweise oder vollständig im Oberbau 42, insbesondere im Straßenbelag 44, angeordnet sein.

Die Markereinheit 30 ist hier im Aufnahmeraum 26 angeordnet. Zusätzlich reicht eine Stange 36 durch ein Halterungselement 34 in den Aufnahmeraum 26 hinein. Die Stange 36 bildet zusammen mit einem Verkehrszeichen 20 ein Verkehrsführungselement 18, welches aus der Bodenoberfläche 22 herausragt. Das Verkehrsführungselement 18 wird dabei von dem Halterungselement 34 gehalten, wobei das Halterungselement 34 in gewissem Maße aus der Bodenoberfläche 22 hervorsteht.

Das Halterungselement 34 ist T-förmig ausgebildet und schließt den Aufnahmeraum 26 nach oben ab. Somit kann bei Bedarf das Halterungselement 34 gelöst werden, wobei der Aufnahmeraum 26 der Aufnahmeeinrichtung 14 freigelegt wird. Durch das erfindungsgemäße Halterungselement 34, welches insbesondere auch als Abdeckung oder als Deckel ausgebildet sein kann, kann die Einbauanordnung 10 flexibel für verschiedene Verkehrsführungselemente 18 genutzt werden.

Die Aufnahmeeinrichtung 14 kann beim Bau des Verkehrsweges 12 sozusagen auf Vorrat für einen zukünftigen Bedarf erstellt, wobei die die Aufnahmeeinrichtung zunächst mit Bodenmaterial bedeckt ist. Mittels beispielsweise einer Suchsonde kann die Aufnahmeeinrichtung 14 dann bei Bedarf durch die darin aufgenommene Markereinheit 30 zuverlässig und schnell lokalisiert und zur Befestigung eines neuen Verkehrsführungselementes 18 genutzt werden.

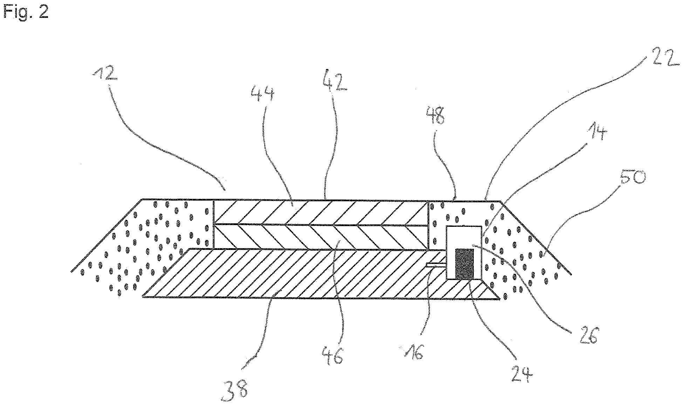

Die Figur 2 zeigt ebenfalls eine schematische Querschnittsansicht eines Verkehrsweges 12 mit einer erfindungsgemäßen Einbauanordnung 10, wobei die Aufnahmeeinrichtung 14 weiter vollständig unterhalb der Bodenoberfläche 22 angeordnet ist. Mit anderen Worten ist die erfindungsgemäße Aufnahmeeinrichtung 14 vollständig von Bodenmaterial und/oder Material zum Stützen des Verkehrsweges 12, insbesondere dem Unterbau 38, umgeben. Vorzugsweise weist die Aufnahmeeinrichtung 14 einen Abstand zur Bodenoberfläche von etwa 5 bis 30 cm auf. Der seitliche Abstand zwischen der erfindungsgemäßen Aufnahmeeinrichtung 14 und dem Verkehrsweg 12 kann insbesondere zwischen 15 cm und 60 cm betragen.

Wie in Figur 2 abgelichtet, kann die Aufnahmeeinrichtung 14 einen umschlossenen Aufnahmeraum 26 aufweisen, der insbesondere rechteckig oder zylindrisch ausgebildet ist. Der Aufnahmeraum 26 kann vollständig oder teilweise umschlossen sein und vorzugsweise zylindrisch aber auch kegelförmig oder rundlich geformt sein. In dem Aufnahmeraum 26 ist ein elektronisches Verkehrszeichen 24 angeordnet, das zum elektronischen Versenden von Funksignalen an Verkehrsteilnehmer ausgebildet seien kann. Das elektronische Verkehrszeichen 24 kann dazu insbesondere eine Funk- und/oder Recheneinheit zur Datenverarbeitung aufweisen. Das hier dargestellte elektronische Verkehrszeichen 24 kann bereits beim Bau des Verkehrsweges 12, beispielsweise mittels einer Abdeckung, in der erfindungsgemäßen Einbauanordnung 10 angebracht werden oder nachträglich hinzugefügt werden. Ebenso kann das elektronische Verkehrszeichen 24 ein herkömmliches Verkehrsführungselement 18 ergänzen.

## Patentansprüche

1. Einbauanordnung (10) entlang eines Randes (48) eines Verkehrsweges (12), insbesondere einer Straße, eines Flusses oder einer Bahnstrecke, mit einer Aufnahmeeinrichtung (14) zum Einbau eines Verkehrsführungselementes (18), wobei die Aufnahmeeinrichtung (14) fest im Untergrund einer Bodenoberfläche (22) installiert ist,
**dadurch gekennzeichnet,**
- **dass** die Aufnahmeeinrichtung (14) einen Aufnahmeraum (26) aufweist und insgesamt unter der Bodenoberfläche (22) angeordnet ist und
- **dass** die Aufnahmeeinrichtung (14) eine Markereinheit (30) zum Lokalisieren der Aufnahmeeinrichtung (14) unter der Bodenoberfläche (22) aufweist.

2. Einbauanordnung (10) nach Anspruch 1,
**dadurch gekennzeichnet,**
- **dass** an der Aufnahmeeinrichtung (14) ein Halterungselement (34) vorgesehen ist und
- **dass** das Halterungselement (34) der Aufnahmeeinrichtung (14) zum Halten von mindestens einem Verkehrsführungselement (18), insbesondere einem Verkehrsschild, ausgebildet ist.

3. Einbauanordnung (10) nach Anspruch 2,
**dadurch gekennzeichnet,**
**dass** das Halterungselement (34) eine Öffnung zum Einsetzen, insbesondere zum Eindrehen oder Einschieben, einer Stange (36) für Verkehrsschilder aufweist, wobei die Stange (36) zumindest teilweise in dem Aufnahmeraum (26) angeordnet ist.

4. Einbauanordnung (10) nach einem der Ansprüche 1 bis 3,
**dadurch gekennzeichnet,**
**dass** die Markereinheit (30) als Responder zum drahtlosen Ansprechen, insbesondere mit einem Draht und/oder einer Spule, ausgebildet ist.

5. Einbauanordnung (10) nach einem der Ansprüche 1 bis 4,
**dadurch gekennzeichnet,**
**dass** die Aufnahmeeinrichtung (14) aus Metall, insbesondere Stahl, Kunststoff und/oder Beton, gebildet ist.

6. Einbauanordnung (10) nach einem der Ansprüche 1 bis 5,
**dadurch gekennzeichnet,**
**dass** die Aufnahmeeinrichtung (14) mit mindestens einem Verankerungselement (16) versehen ist.

7. Einbauanordnung (10) nach einem der Ansprüche 1 bis 6,
**dadurch gekennzeichnet,**
**dass** die Aufnahmeeinrichtung (14) mit einer Sensoreinheit, insbesondere einem GPS-Sensor, versehen ist.

8. Einbauanordnung (10) nach einem der Ansprüche 1 bis 7,
**dadurch gekennzeichnet,**
**dass** die Aufnahmeeinrichtung (14) mit einer Funkeinrichtung versehen ist, welche zum Versenden von Positions- und/oder Geschwindigkeitsdaten an Verkehrsteilnehmer ausgebildet ist.

9. Verfahren zum Erstellen einer Einbauanordnung (10), insbesondere nach einem der Ansprüche 1 bis 8, entlang eines Randes (48) eines Verkehrsweges (12), insbesondere einer Straße, eines Flusses oder einer Bahnstrecke, mit einer Aufnahmeeinrichtung (14) zum Einbau eines Verkehrsführungselementes (18), wobei die Aufnahmeeinrichtung (14) fest im Untergrund einer Bodenoberfläche (22) installiert wird,
**dadurch gekennzeichnet,**
**dass** die Aufnahmeeinrichtung (14) mit einem Aufnahmeraum (26) insgesamt unter der Bodenoberfläche (22) angeordnet wird und
**dass** die Aufnahmeeinrichtung (14) mit einer Markereinheit (30) zum Lokalisieren der Aufnahmeeinrichtung (14) unter der Bodenoberfläche (22) versehen wird.

10. Verfahren zum Erstellen einer Einbauanordnung nach Anspruch 9,
**dadurch gekennzeichnet,**
**dass** die Aufnahmeeinrichtung (14) bei oder nach dem Bau des Verkehrsweges (12) fest im Untergrund der Bodenoberfläche (22) installiert wird.

11. Verfahren zum Erstellen einer Einbauanordnung nach Anspruch 9 oder Anspruch 10,
**dadurch gekennzeichnet,**
**dass** ein Verkehrsführungselement (18) nachträglich in die Aufnahmeeinrichtung (14) eingebaut wird, wobei die Aufnahmeeinrichtung (14) mittels der Markereinheit (30) lokalisiert wird.

12. Verfahren zum Erstellen einer Einbauanordnung nach einem der Ansprüche 9 bis 11,
**dadurch gekennzeichnet,**
**dass** der Verkehrsweg (12), insbesondere eine Straße, mit einem verfestigten Unterbau (38) und einem Oberbau (42) ausgebildet wird, wobei die Aufnahmeeinrichtung (14) in dem verfestigten Unterbau (38) fest angebracht wird.
